# EUROPEAN PATENT SPECIFICATION

(11) **EP 1 985 038 B1**
(45) Date of publication and mention of the grant of the patent: **18.10.2017**
(21) Application number: 07701058.5
(22) Date of filing: 24.01.2007
(51) Int. Cl.: H04W 48/18, H04W 60/04

(54) **METHOD AND APPARATUS FOR NETWORK SELECTION AND/OR RE-SELECTION OF A TERMINAL IN A CELLULAR COMMUNICATION SYSTEM**
VERFAHREN UND VORRICHTUNG ZUR NETZWERKAUSWAHL UND/ODER NEUAUSWAHL EINES ENDGERÄTS IN EINEM ZELLULAREN KOMMUNIKATIONSSYSTEM
PROCÉDÉ ET APPAREIL PERMETTANT À UN TERMINAL DE SÉLECTIONNER ET/OU RESÉLECTIONNER UN RÉSEAU DANS UN SYSTÈME DE COMMUNICATION CELLULAIRE

(30) Priority: 24.01.2006 GB 0601407; 04.05.2006 GB 0608843
(43) Date of publication of application: 29.10.2008
(73) Proprietor: Samsung Electronics Co., Ltd., Suwon-si, Gyeonggi-do, 443-742 (KR)
(72) Inventor: CHIN, Chen-Ho, Staines, Middlesex TW18 4QE (GB); VAN DER VELDE, Himke, Staines, Middlesex TW18 4QE (GB); VAN LIESHOUT, Gert Jan, Staines, Middlesex TW18 4QE (GB)
(74) Representative: Grünecker Patent- und Rechtsanwälte PartG mbB
(86) International application number: PCT/KR2007/000420
(87) International publication number: WO 2007/086679

(56) References cited:
- WO-A1-2004/077752
- JP-A- 2003 273 922
- JP-A- 2005 252 493
- US-A1- 2003 069 037
- US-B1- 6 625 132
- 3: "Out of service in 3G Idle mode and Ping Pong", 3GPP DRAFT; NSW-060005, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Amsterdam, the Netherlands; 20060124, 17 January 2006 (2006-01-17), XP050440821, [retrieved on 2006-01-17]
- ERICSSON: "Ericsson comments on NSP problems", 3GPP DRAFT; NSW-060015-ERICSSON-NSP-COMMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Amsterdam, Netherlands; 20060124 - 20060125, 18 January 2006 (2006-01-18), XP050647762, [retrieved on 2006-01-18]
- T-MOBILE ET AL: "Discussion on Cell Selection and Reselection Parameters", 3GPP DRAFT; R2-050703, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Scottsdale, USA; 20050222, 22 February 2005 (2005-02-22), XP050127908, [retrieved on 2005-02-22]

## Description

### BACKGROUND OF THE INVENTION

### 1. Field of the Invention

The present invention relates to mobile communication techniques. More particularly, but not exclusively, it relates to Public Land Mobile Network (PLMN) ping pong avoidance mechanisms.

It is applicable to both the Access Stratum (AS) and the Non Access Stratum (NAS) protocols as used in different mobile/radio access network e.g. Global System for Mobile communication (GSM), Universal Mobile Telecommunications System (UMTS). The idea is expected to be applicable from release 7 onwards.

### 2. Description of the Related Art

A brief description of the UMTS radio network architecture including background information about aspects related to PLMN selection, is provided below.

Further background information about a number of aspects related to this invention is provided by means of a number of extracts from standards.

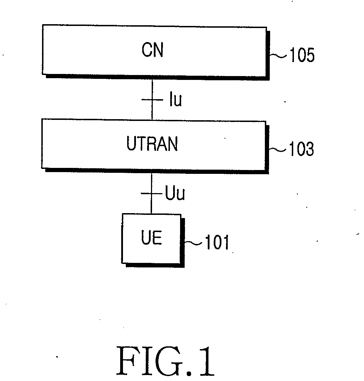

FIG. 1 is a block diagram illustrating a configuration of a typical universal mobile telecommunications system (UMTS).

Referring to the fig.1, the typical UMTS comprises of mobile user equipments (UEs) 101, a UMTS terrestrial radio access network (UTRAN) 103 and one or more core networks (CNs) 105 as shown in the fig.1. UMTS concerns a third generation radio network using wideband code division multiple access (W-CDMA) technology.

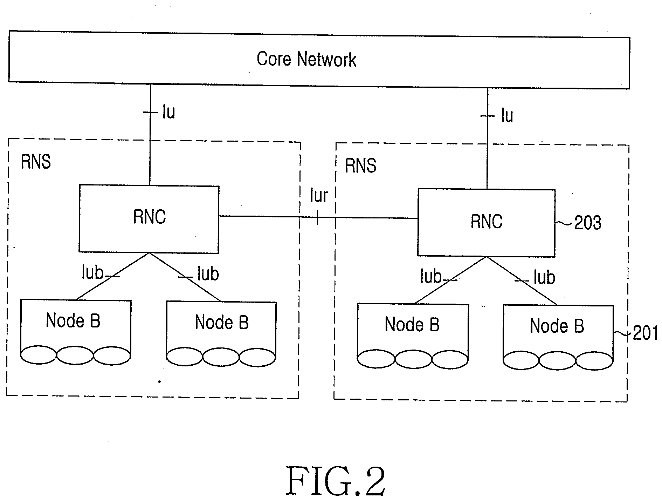

FIG. 2 is a block diagram illustrating a configuration of the typical UTRAN as shown in the fig.1.

Referring to fig.2, the typical architecture of the UTRAN comprises a plurality of Node Bs 201 as base stations and a plurality of radio network controllers (RNCs) 203 as base station controllers. The Node Bs handle the actual communication across the radio interface, covering a specific geographical area also referred to as a cell. Besides controlling the Node Bs connected to it the RNCs include functionality like the allocation of radio resources and local mobility.

An RNC connects:
to one or more core networks via the Iu interface,to a number of base stations (node B's for the case of UTRAN) via the Iub interface and possibly to one or more other RNCs via the Iur interface.

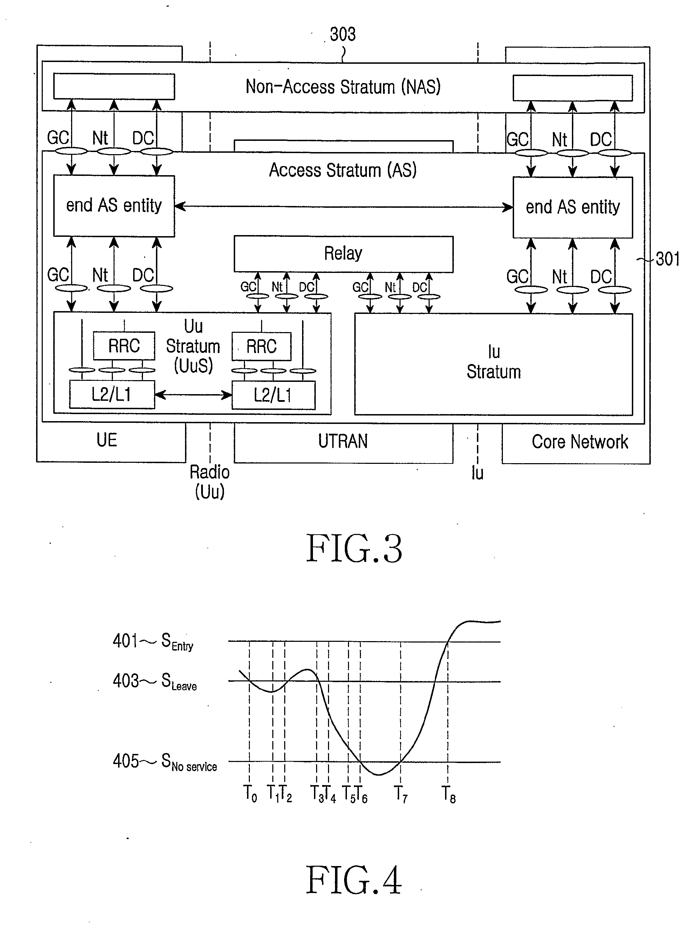

FIG. 3 is a block diagram illustrating a configuration of the typical UMTS grouped into the Access Stratum (AS) and the Non-Access Stratum (NAS).

Referring to the fig.3, the fig.3 again shows the UMTS architecture in terms of its entities User Equipment (UE), UTRAN and Core Network. Furthermore, the respective reference points Uu (Radio Interface) and Iu (CN-UTRAN interface) are shown. Finally, the figure illustrates furthermore the high-level functional grouping into the AS 301 and the NAS 303.

The AS 301 includes the lower radio specific layers of the protocols i.e. in UMTS this includes the Radio Resource Control, the Radio Link Control and the Medium Access Control protocols as well as the Physical layer functionality. The Access Stratum offers services through the following Service Access Points (SAP) to the Non-Access Stratum (marked with circles in the figure):General Control (GC) SAPs;
Notification (Nt) SAPs; and
Dedicated Control (DC) SAPs.

The NAS 303 includes the upper radio specific layers of the protocols i.e. in UMTS this includes e.g. the Call Control (CC), the Mobility Management (MM) and the Session Management (SM) protocols.

A detailed description will now be made of detecting 'out of service' in the following two aspects:
1)UEs in Idle & _PCH 25.133 clause 4.2.2.1 specifies:
   If the UE has evaluated in Nserv consecutive DRX cycles that the serving cell does not fulfil the cell selection criterion S, the UE shall initiate the measurements of all neighbour cells indicated in the measurement control system information, regardless of the measurement rules currently limiting UE measurement activities.
   If the UE has not found any new suitable cell based on searches and measurements of the neighbour cells indicated in the measurement control system information for 12 s, the UE shall initiate cell selection procedures for the selected PLMN as defined in TR 22.811, Review of Network Selection Principles, version 7.0.0 (hereinafter "reference 1")

   After this 12 s period a UE in Cell:PCH or URA_PCH is considered to be "out of service area" and shall perform actions according to 25.331.
2) For UEs in CELL_FACH 25.133 clause 5.5.2.3 specifies:
   The UE is "out of service area" if the UE has evaluated for 4 s that the serving cell does not fulfil the cell selection criterion S and if the UE has not found any new suitable cell based on searches and measurements of the neighbour cells indicated in the measurement control system information during these 4 s. When the UE is "out of service area" it shall initiate cell selection procedures for the selected PLMN as defined in the reference 1. Hereinafter, an action upon detecting out of service will be described with regard to URA_PCH state, CELL_PCH state and CELL_FACH state in detail.

Regarding the actions upon detecting out of service, 25.331 specifies the following:
8.5.5.1.1 Actions following detection of "out of service" area in URA_PCH or CELL_PCH state
   If the UE detects the "out of service area" and the UE is in URA_PCH or CELL_PCH state it shall perform the following actions:
   1> start timer T316;
   1> perform processes described in subclause 7.2.2.
8.5.5.1.2 Actions following detection of "out of service" area in CELL_FACH state
   If the UE detects the "out of service area" and the UE is in CELL_FACH state it shall perform the following actions. The UE shall:
   1> start timer T317 if not already running;
   1> perform processes described in subclause 7.2.2.

   With clause 7.2.2 specifying
   1> if the UE is "out of service area":
   2> perform cell selection process as specified in TS 25.331, Radio Resource Control(RRC); Protocol Specification (hereinafter "reference 2");
   2> run timer T316;
   2> run timer T305;
   2> if the cell selection process fails to find a suitable cell after a complete scan of all RATs and all frequency bands supported by the UE, the UE shall after a minimum of TimerOutOfService time (default value 30 s) of being "out of service area":
   3> indicate all available PLMNs to NAS to enable the selection of a new PLMN;
   3> if an acceptable cell is found then the UE shall camp on that cell to obtain limited service as defined in the reference 2 and, perform actions according to subclause 8.5.24;
   3> else if no acceptable cell is found, the UE shall continue looking for an acceptable cell as defined in the reference 2.

Hereinafter, it will be described regarding the support of PLMN selection, 25.304 specifies the following:

### 5.1.2.2 UTRA case

The UE shall scan all RF channels in the UTRA bands according to its capabilities to find available PLMNs. On each carrier, the UE shall search for the strongest cell and read its system information, in order to find out which PLMN the cell belongs to. If the UE can read the PLMN identity, the found PLMN shall be reported to the NAS as a high quality PLMN (but without the RSCP value), provided that the following high quality criterion is fulfilled:
1. For an FDD cell, the measured primary CPICH RSCP value shall be greater than or equal to -95 dBm.
2. For a TDD cell, the measured P-CCPCH RSCP shall be greater than or equal to -84 dBm.

Found PLMNs that do not satisfy the high quality criterion, but for which the UE has been able to read the PLMN identities are reported to the NAS together with the CPICH RSCP value for UTRA FDD cells and P-CCPCH RSCP for UTRA TDD cells.

The search for PLMNs on the rest of the carriers may be stopped on request of the NAS. The UE may optimise this search by using stored information of carrier frequencies and optionally also information on cell parameters, e.g. scrambling codes, from previously received measurement control information elements.

Once the UE has selected a PLMN, the cell selection procedure shall be performed in order to select a suitable cell of that PLMN to camp on.

Hereinafter, it will be described regarding cell selection and PLMN reselection in detail.

### Cell selection

Regarding cell selection/ cell suitability, 25.304 specifies the following:
5.2.3 Cell Selection Process
5.2.3.1 UTRA case
5.2.3.1.1 Description

The UE shall use one of the following two search procedures:
a) Initial Cell Selection

This procedure requires no prior knowledge of which RF channels are UTRA carriers. The UE shall scan all RF channels in the UTRA bands according to its capabilities to find a suitable cell of the selected PLMN. On each carrier, the UE need only search for the strongest cell. Once a suitable cell is found this cell shall be selected.

### b) Stored Information Cell Selection

This procedure requires stored information of carrier frequencies and optionally also information on cell parameters, e.g. scrambling codes, from previously received measurement control information elements. Once the UE has found a suitable cell for the selected PLMN the UE shall select it. If no suitable cell of the selected PLMN is found the Initial cell selection procedure shall be started.

Table 1 to Table 3 below illustrate criteria and variable defined for cell selection.

The cell selection criterion S is fulfilled when:

**Table 1**

| | |
|---|---|
| for FDD cells: | Srxlev > 0 AND Squal > 0 |
| for TDD cells: | Srxlev > 0 |

**Table 2**

| |
|---|
| Squal = Q_{qualmeas} - Qqualmin |
| Srxlev = Qᵣₓₗₑᵥₘₑₐₛ - Qrxlevmin - Pcompensation |

**Table 3**

| | |
|---|---|
| Squal | Cell Selection quality value (dB) |
| | Applicable only for FDD cells. |
| Srxlev | Cell Selection RX level value (dB) |
| Q_{qualmeas} | Measured cell quality value. The quality of the received signal expressed in CPICH E_{c}/N₀ (dB) for FDD cells. CPICH Ec/N0 shall be averaged as specified in [10]. |
| | Applicable only for FDD cells. |
| Qᵣₓₗₑᵥₘₑₐₛ | Measured cell RX level value. This is received signal, CPICH RSCP for FDD cells (dBm) and P-CCPCH RSCP for TDD cells (dBm). |
| Qqualmin | Minimum required quality level in the cell (dB). |
| | Applicable only for FDD cells. |
| Qrxlevmin | Minimum required RX level in the cell (dBm) |
| Pcompensatio n | max(UE_TXPWR_MAX_RACH - P_MAX, 0) (dB) |
| UE_TXPWR _MAX_RAC H | Maximum TX power level an UE may use when accessing the cell on RACH (read in system information) (dBm) |
| P_MAX | Maximum RF output power of the UE (dBm) |

### PLMN re-selection

Regarding (automatic) PLMN selection, 23.122 specifies the following:

### 4.4.3.1.1 Automatic Network Selection Mode Procedure

The MS selects and attempts registration on other PLMN/access technology combinations, if available and allowable, in the following order:
i) HPLMN (if not previously selected);
ii) each PLMN/access technology combination in the "User Controlled PLMN Selector with Access Technology" data file in the SIM (in priority order);
iii) each PLMN/access technology combination in the "Operator Controlled PLMN Selector with Access Technology" data file in the SIM (in priority order);
iv) other PLMN/access technology combinations with received high quality signal in random order;
v) other PLMN/access technology combinations in order of decreasing signal quality.

When following the above procedure the following requirements apply:
a) An MS with voice capability shall ignore PLMNs for which the MS has identified at least one GSM COMPACT.
b) In A/Gb mode or GSM COMPACT, an MS with voice capability, or an MS not supporting packet services shall not search for CPBCCH carriers.
c) In ii and iii, the MS should limit its search for the PLMN to the access technology or access technologies associated with the PLMN in the appropriate PLMN Selector with Access Technology list (User Controlled or Operator Controlled selector list). An MS using a SIM without access technology information storage (i.e. the "User Controlled PLMN Selector with Access Technology" and the "Operator Controlled PLMN Selector with Access Technology" data files are not present) shall instead use the "PLMN Selector" data file, for each PLMN in the "PLMN Selector" data file, the MS shall search for all access technologies it is capable of and shall assume GSM access technology as the highest priority radio access technology.
d) In iv and v, the MS shall search for all access technologies it is capable of, before deciding which PLMN to select.
e) In ii, and iii, a packet only MS which supports GSM COMPACT, but using a SIM without access technology information storage (i.e. the "User Controlled PLMN Selector with Access Technology" and the "Operator Controlled PLMN Selector with Access Technology" data files are not present) shall instead use the "PLMN Selector" data file, for each PLMN in the "PLMN Selector" data file, the MS shall search for all access technologies it is capable of and shall assume GSM COMPACT access technology as the lowest priority radio access technology.
f) In i, the MS shall search for all access technologies it is capable of. No priority is defined for the preferred access technology and the priority is an implementation issue, but "HPLMN Selector with Access Technology" data file on the SIM may be used to optimise the procedure.
g) In i, an MS using a SIM without access technology information storage (i.e. the "HPLMN Selector with Access Technology" data file is not present) shall search for all access technologies it is capable of and shall assume GSM access technology as the highest priority radio access technology. A packet only MS which supports GSM COMPACT using a SIM without access technology information storage shall also assume GSM COMPACT access technology as the lowest priority radio access technology.
h) In v, the MS shall order the PLMN/access technology combinations in order of decreasing signal quality within each access technology. The order between PLMN/access technology combinations with different access technologies is an MS implementation issue.

NOTE 1: Requirements a) and b) apply also to requirement d), so a GSM voice capable MS should not search for GSM COMPACT PLMNs, even if capable of GSM COMPACT.

NOTE 2: Requirements a) and b) apply also to requirement f), so a GSM voice capable MS should not search for GSM COMPACT PLMNs, even if this is the only access technology on the "HPLMN Selector with Access Technology" data file on the SIM.

NOTE 3: High quality signal is defined in the appropriate AS specification.

If successful registration is achieved, the MS indicates the selected PLMN.

If registration cannot be achieved because no PLMNs are available and allowable, the MS indicates "no service" to the user, waits until a new PLMN is available and allowable and then repeats the procedure.

If there were one or more PLMNs which were available and allowable, but an LR failure made registration on those PLMNs unsuccessful or an entry in any of the lists "forbidden LAs for roaming", or "forbidden LAs for regional provision of service" prevented a registration attempt, the MS selects the first such PLMN again and enters a limited.

In addition, terminologies with regard to abbreviations described in this description are the following:

### Abbreviations & terminology

- ABS: Automatic Background Scan
- LR-PLMN: Last Registered PLMN
- NRP: National Roaming Partner
- NSP: Network Selection Principles
- OOS: Out Of Service
- PPPA: PLMN Ping Pong Avoidance
- PR-PLMN: Previously Registered PLMN

Other abbreviations and terminologies can be found in 3GPP TS 21.905

### Problem description

The following is an extract from 3GPP TR 22.811 version 7.0.0.

### 6.10 Ping ponging between Registration Areas

Currently the mechanisms standardised do not seem to adequately cater for the national roaming scenario nor for multi RAT (3G, WLAN, 2G etc.) environments. This, when associated with fluctuating signal condition, can lead to UE ping-ponging between 2G and 3G , causing significant signalling load on the network as well as severely affecting user experience.

The currently specified behaviour is as follows:
- If less than 12 seconds, the UE will be momentarily out of coverage but will not declare out of service (OOS), and then it will come back to the serving cell.
- If slightly more than 12 seconds, the UE will declare Out-of-service(OOS) and start scanning, but then will most likely come back to the same 3G cell.
- If longer (∼30 sec) the UE may go to a national roaming partner, but after 6 minutes it is likely to come back to the same weak 3G cell upon the first background HPLMN search.

This will create instability that will affect user experience as this is a source of missed calls, failed call setups and possible denial of certain services.

Means should be reviewed to improve the effect of ping ponging between registration areas. It should be possible to allow the network to be configured by the operator so as to enable the definition of different quality criteria for leaving and coming back to a cell/PLMN.

### Detailed description current UE behaviour

The currently specified UE behaviour is as follows:
When the UE is near the edge of the operators PLMN coverage area, the UE may go 'out of service'.

If the serving cell does not fulfil the cell selection criterion over at least 3 measurement periods TMeasurement_Period Intra (_FACH) or for Nserv consecutive DRX cycles (idle & _PCH).

Note 1. Network operators normally configure their network such that even cells that are quite bad will still meet the criteria for a suitable cell - they don't like mobiles to indicate 'out of service'.

During the next 4 (_FACH) or 12 s (idle & _PCH), the UE will search for another cell on the current (e)PLMN, based on the neighbouring cell list (both inter-Frequency and inter- RAT neighbours).

Cell re-selection is initiated if a suitable cell is found for the current (e)PLMN.

If no cell is found, a UE in connected mode is considered to be 'out of service'. Furthermore, the UE shall acts as defined below.

Next, the UE performs a complete scan of all RATs and all frequency bands supported by the UE in an attempt to find a suitable cell for the current (e)PLMN.

If a suitable cell is found during this complete scan, the UE does not need to perform a routing area update unless it is changing Routing Area i.e. there may not be NAS signalling involved.

Note 2. The UE does not stop T305 (5 min. or higher) and/ or T307 (5 through 50 sec) upon reporting available PLMNs.

If no suitable cell is found during this complete scan, after at least 30 s (default value of TimerOutOfService) <connected mode> the UE should indicate the available PLMNs to facilitate re-selection of another PLMN.

The UE-AS reports the available PLMNs.

UE-AS reports PLMNs for which the 'high quality criterion' is fulfilled as 'high quality PLMNs'.

UE-AS also reports other available PLMNs i.e. PLMNs for which the UE managed to read the PLMN identity on BCCH, together with a measured quality (p-CPICH RSCP in case of FDD).

Note3. When reporting available PLMNs, the UE need not verify if the cell from which it reads the PLMN identity is suitable e.g. whether or not it is barred.

The UE-NAS selects a PLMN from the available PLMNs indicated by AS, in the following order of preference:

### Home PLMN

User preferred PLMN/ access technologies using 'User controlled PLMN selector with Access Technology', in order of priority.

Operator preferred PLMN/ access technologies using 'Operator controlled PLMN selector with Access Technology', in order of priority.

Other PLMNs/ access technologies, indicated as 'high quality', randomly.

Other PLMNs/ access technologies, in order of signal strength.

The UE periodically performs a background scan for available PLMNs.

As mentioned before, no constraints are specified concerning the PLMN selection meaning that in case of fluctuating radio conditions e.g. due to cell breathing, the UE may re-select a different PLMN each time.

### Discussion on characteristics of desired improvement

On the issue of ping pong between registration areas (PLMNs in actual), the main perceived problem is as follows:
Upon performing the first or a subsequent background PLMN scan, the UE may move back towards the original cell/ PLMN, even though the quality of the original UMTS cell may still be quite bad - just about suitable.

When remaining at the edge of the coverage area, the UE may ping pong between the PLMNs regularly.

The main adverse effects associated with this PLMN-ping pong are the signalling load and the temporary user unavailability. (i.e. 34- 42 seconds and associated signalling delays for every ping pong).

Therefore, a need therefore exists for an apparatus and method for avoiding risk of ping pong between PLMNs.

"Out of service in 3G Idle mode and Ping Pong", 3GPP Draft; NSW-060005, 3rd Generation Partnership Project (3GPP), Mobile Competence Centre; 650, Route des Lucioles; F-06921 Sophia-Antipolis Cedex; France, no. Amsterdam, the Netherlands; 20060124, 17 January 2006 relates to out of service in 3G idle mode and ping pong. This document was prepared for the TSG-SA NSP Workshop held in Amsterdam on January 24-25, 2006. This document highlights the problem of ping pong during PLMN selection as an issue in the national roaming scenario, in more detail than the SA1 TR.

Ericsson: "Ericsson comments on NSP problems", 3GPP Draft: NSW-060015-Ericsson-NSP-Comments, 3rd Generation Partnership Project (3GPP), Mobile Competence Centre; 650, Route des Lucioles; F-06921 Sophia-Antipolis Cedex; France, no. Amsterdam, Netherlands; 20060124-20060125, 18 January 2006 relates to Ericsson comments on NSP problems. This document was prepared for the SA NSP Workshop held in Amsterdam on January 24-25, 2006. This document includes the Ericsson comments inserted in the latest NSP TR, 22.811, chapter 6 and summarizes Ericsson's view of the problems defined and also includes to some extent the authors' suggestions on how to proceed with the NSP work.

T-Mobile et al: "Discussion on Cell Selection and Reselection Parameters", 3GPP Draft; R2-050703, 3rd Generation Partnership Project (3GPP), Mobile Competence Centre; 650, Route Des Lucioles; F-06921 Sophia-Antipolis Cedex; France, vol. RAN WG2, no. Scottsdale, USA; 20050222, 22 February 2005 relates to discussion on cell selection and reselection parameters. This document was prepared for the 3GYP TSG-RAN WG2 Meeting #4 held in Scottsdale, USA on February 14-18, 2005. According to this document, in RAN2#45, Vodafone presented a document in (R2-042292) which addressed a problem for cell reselection found in commercial WCDMA networks: The current parameterization possibilities of UMTS do not allow operators to configure a network in an optimum way to avoid ping-pong effects on the one hand, while allowing fast and reliable cell reselection to avoid missed pages and potential transmission errors due to staying in bad coverage too long (Introduction). D3 is for discussion and decision related to the issues addressed by the document presented by Vodaphone.

WO 2004/077752 A1 relates to wireless local access network system detection and selection. This document discloses a method and apparatus for detection and selection of Wireless Local Area Network (WLAN) service. A remote device includes a preference database for storing selection criteria for a plurality of access media. Access medium detector(s) determine accessibility of access media, and a selector selects one of the access media based on the selection criteria. The selection criteria indicate when on which to switch between access media.

### SUMMARY OF THE INVENTION

It is the object of the present invention to provide an improved method and system for cell selection in a cellular communication system.

This object is solved by the subject matter of the independent claims.

Preferred embodiments are defined by the dependent claims.

It is, therefore, an object of an exemplary embodiment of the present invention to provide an apparatus and method for PLMN ping pong avoidance.

It is another object of an exemplary embodiment of the present invention to provide an apparatus and method for preventing the UE from reselecting the 2G NRP due to a small gap of 3G coverage, the UE should use a timer during which PLMN reselections are forbidden after a loss of 3G coverage even if the UE is in idle mode.

To achieve the above and other objects, there is provided a method for improving network selection and/or network re-selection of a mobile terminal in a cellular communications system by specifying radio quality criteria to avoid repeated change of networks.

According to another aspect of the present invention, there is provided a mobile terminal for use in a cellular communications network, adapted to select or re-select a PLMN based on radio quality criteria for avoiding repeated change of PLMN in the process of PLMN selection.

According to another aspect of the present invention, there is provided a network element in a cellular communications network, adapted to provide radio quality criteria for a mobile terminal selecting or re-selecting a PLMN.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating a configuration of a typical universal mobile telecommunications system (UMTS);
FIG. 2 is a block diagram illustrating a configuration of a typical UTRAN as shown in the fig.1;
FIG. 3 is a block diagram illustrating a configuration of the typical UMTS grouped into the Access Stratum (AS) and the Non-Access Stratum (NAS);
FIG. 4 shows an example of the use of a criteria for a scenario including OOS according to an exemplary embodiment of the present invention;
FIG. 5 is a flowchart illustrating the communications between the UE-AS, UE-NAS and a network element according to one embodiment of the present invention;
FIG. 6 is a schematic illustration of a deployment scenario according to another embodiment of the present invention.

Throughout the drawings, the same drawing reference numerals will be understood to refer to the same elements, features and structures.

### DETAILED DESCRIPTION OF THE EXEMPLARY EMBODIMENTS

An exemplary embodiment of the present invention will now be described in detail with reference to the annexed drawings. The matters defined in the description such as a detailed construction and elements are provided to assist in a comprehensive understanding of the embodiments of the invention.

Accordingly, those of ordinary skill in the art will recognize that various changes and modifications of the embodiments described herein can be made without departing from the scope of the invention. Also, in the following description, a detailed description of known functions and configurations incorporated herein has been omitted for conciseness.

Currently no mechanisms are available to avoid the ping pong between PLMNs. So far only a suggestion has been provided concerning what kind of mechanism may be desirable i.e. to introduce some kind of asymmetry i.e. to make the criteria for returning and leaving different.

Possible solutions using existing mechanisms include the following:
Increasing the background scan timer could reduce the ping pong upon ABS, but that would harm moving UEs.

No mechanism is specified at AS level, which is partly due to the fact that after the PLMN re-selection the UE performs cell selection rather than reselection i.e. the cell re-selection hysteresis/ offsets do not apply. Furthermore, UE-AS reports all PLMNs of which it managed to read the PLMN identity as available.

No mechanism is currently available at NAS level either. It is important to note that when selecting PLMNs, HPLMN as well as User and Operator preference take precedence above the radio quality reported by AS i.e. UE-NAS shall select the highest priority PLMN even though the radio quality may be quite bad (just found to be suitable by AS).

Some further discussion/ assumptions on what the desired improvement may/ should give:
It seems operators prefer to avoid the signalling load & bad user experience, even though this implies that it will make it harder/ take longer for the UE to return to the operator's PLMN.

The problem only concerns a stationary UE since this slow kind of ping pong is rather unlikely for UEs that are moving.

It does not seem unlikely that a stationary UE at one time detects out of service while at a following background scan the UE is able to read system information and report it as an available PLMN.

The mechanism should at least avoid the PLMN ping pong at 'PLMN reselection' i.e. upon every background scan since that scenario suffers from most of the adverse effects.

It would be beneficial if the mechanism could also address the case of the direct return to the cell/ PLMN in which the out of service was triggered i.e. upon the initial full scan upon detecting OOS.

Since the NSP workshop of 25th Jan 2006 in Amsterdam, operator '3' prepared a further detailed proposal which can be characterised as follows:
For further details are described in R2-060586 Network Selection and Ping Pong Effect, 3.

Separate sets of operator controllable hysteresis parameters are proposed for each of the two scenario's.

A temporary offset for the Ec/No criterium (0 to 10 dB with a 0.5 or 1 dB step).

A temporary offset for the RSCP criterium (as above)

A duration specifying how long the offsets are to be applied (Tens of seconds/ tens of minutes).

The UE acquires the parameters from the candidate cell, which broadcasts these possibly cell specific parameters as part of cell selection parameters (SIB3).

The UE shall consider a cell of the RPLMN (upon OOS)/ higher priority PLMN (upon ABS) suitable only if it meets the Scriteria after applying the concerned temporary hysteresis offset to each of the quality criteria. Correspondingly, UE-AS may report to NAS fewer available PLMNs than PLMNs found suitable according to the original criteria.

Our understanding according to the present invention about the proposed use of the above parameters is as follows:
When detecting OOS from a cell broadcasting PPPA-control parameters, the UE starts applying the temporary discouragement towards the concerned cell. At the same time, the UE starts an 'OOS-discouraged PLMN' timer. The UE stops applying the temporary discouragement towards a cell of the 'OOS-discouraged PLMN' when the timer exceeds the value broadcast by the concerned cell. The UE also stops applying the temporary discouragement towards the 'OOS-discouraged PLMN' when re-entering 'in service area'.

Upon entering a VPLMN, the UE starts an 'ABS-discouraged PLMN' timer. When detecting a cell of a higher priority PLMN broadcasting PPPA-control parameters, the UE applies the temporary discouragement as long as the timer exceeds the value broadcast by the concerned cell. When re-selecting another PLMN, the UE restarts the 'ABS-discouraged PLMN' timer.

Furthermore, it is important to note that in order to avoid that the UE needs to record the PR-PLMN, the PPPA-mechanism is proposed to apply to a PLMN regardless of whether the UE was previously registered on it.

Hereinafter, ping pong avoidance mechanisms according the present invention are described in detail.

This can be achieved in different ways:
1) Quality level approach: Different quality levels i.e. by specifying that the UE should only move back if the quality level is sufficiently high e.g. offset higher than the criteria for leaving the cell/ considering out of service.
2) Quality duration approach: Different quality durations i.e. by specifying that the UE should only move back if the conditions for returning last longer than for leaving/ detecting out of service e.g. by using a scaling factor for the timer (e.g. similar to what we have for Treselection).

At first glance, a timer based mechanism has the disadvantage that it could further increase the duration of the 'unavailability period'.

Although we do not wish to exclude the 'Quality duration' approach, the following sections are primarily focussed on the 'Quality offset' approach. However, some of the principles discussed may also be applied for the 'Quality duration' approach also.

A PLMN ping pong avoidance mechanism can either utilise a quality level or a quality duration based criterion.

As a further option, the ping pong avoidance could, irrespective of which mechanism is used, be temporary meaning that ping pong avoidance is limited to a specific duration. For a UE that is stationary, a timer based mechanism is most suitable for limiting the duration while for UEs that are (starting) to move, a mechanism based on the movement of the UE could be used e.g. the number of cell re-selections, the distance moved since the UE was registered on the previous PLMN (e.g. in case the UE).

The PLMN ping pong avoidance could, irrespective of which mechanism is used, be temporary. This could be done by means of a timer based mechanism and/ or in combination with a mechanism related to the UE movement e.g. the number of cell re-selections or the distance moved since the UE was registered on the previous PLMN.

One possible realisation of the mechanisms described in the previous is given, purely as an example. This concerns a mechanism with 'Temporary barring', which could work as follows. The UE would mark the cell/ PLMN which previously triggered 'out of service' as barred for a limited duration i.e. the UE should not re-select the PLMN for a given, possibly configurable duration or a number of re-selections, unless the measured quality exceeds a certain quality level e.g. the 'high quality condition'.

Alternatively to the temporary PLMN ping pong avoidance mechanism discussed above, a permanent mechanism can be used. The following considerations lead to the thought that a permanent mechanism may in fact result in a better solution than use of a temporary mechanism:
When the UE stops applying the temporary offset, it is likely to move back to the previous PLMN. Hence, a timer based temporary mechanism may cause the UE to ping pong with a frequency corresponding with the duration of the temporary offset.

As mentioned before, in order to simplify UE implementation, the PPPA-mechanism is proposed to apply to a PLMN regardless of whether the UE was previously registered on it. This implies that the UE does not need to record the PR-PLMN.

In order to avoid that the UE indicates 'out of service', the S-criterion is typically set to a rather low value i.e. a value that does not guarantee that the UE is able to properly communicate with the network. This, together with the fact that the selection of PLMNs is not primarily based on radio link quality means that the UE may select a PLMN for which the radio link quality is quite poor. In such a case, it may be desirable to allow the UE to select a lower priority PLMN that is able to offer a proper level of service.

The above suggests that a permanent discouragement mechanism is not just beneficial for avoiding ping pong between PLMN, but more generally in order to have a means to improve the UE's service availability. Permanent mechanism is used in the following to denote a mechanism that is not applied in a temporary manner.

### UE application rules for a permanent mechanism

The UE would apply the permanent discouragement upon every PLMN reselection, possibly including the manual ones i.e. UE-AS only indicates PLMNs as available after considering the permanent discouragement threshold, broadcast by the concerned cell.

The UE would not apply the parameters upon initial PLMN selection, to avoid excessive delays in case only single PLMN is found. In case the UE can only detect a single PLMN which is only available if the discouragement is not applied, the mechanism would otherwise imply that the UE has to try all frequencies and RATs before deciding not to apply the discouragement.

The UE should not apply the permanent discouragement either if the 'previous PLMN' is the only PLMN the UE finds suitable according to the original criteria.

### Further related ideas

Like the newly defined criteria for 'entering a PLMN', also criteria for 'leaving a PLMN' could be defined. The rationale is that, to ensure a proper service provisioning, one would like the UE to leave earlier than defined by the current 'cell suitability criteria'. The 'cell suitability criteria' would remain unaltered and continue to define the criteria for indicating 'out of service' on the display of the mobile.

### Possible realisations/ examples

In this section some further suggestions are provided concerning the use of three separate criteria, merely as examples:
One quality criterion for leaving a PLMN i.e. if the quality is below this threshold, the UE is allowed to leave the current PLMN.
One quality criterion for entering a PLMN i.e. the UE should only enter a PLMN if the quality is above this threshold. One quality criterion for displaying 'out of service' i.e. for not considering any of the available PLMNs as suitable.

FIG. 4 shows an example of the use of the above criteria for a scenario including OOS according to an exemplary embodiment of the present invention.The scenario illustrated in the Fig. 4 can be describe in terms of a number of events, marked as Tn in the figure:
T0 When the quality of the current cell drops below S_{LEAVE} 403 UE-AS starts a Timer-A (4s when in CELL_FACH, 12s otherwise). UE-AS continues cell re-selection for the registered (e)PLMN
T1 Timer-A, started at T0 expires, indicating that the quality of the current cell has been below S_{LEAVE} 403 long enough to detect OOS. The UE-AS starts Timer-B. The UE has not left the registered PLMN as yet, but from now on UE-AS applies cell selection for the registered (e)PLMN
T2 The quality of the current cell exceeds S_{LEAVE} 403, upon which UE-AS stops Timer-B and resumes normal service for the registered (e)PLMN
T3 As T0
T4 As T1
T5 Timer-B, started at T4 expires, indicating that the quality of the current cell has been below S_{LEAVE} 403 long enough to 'leave' the PLMN. From now on the UE-AS applies cell selection for any PLMN
T6 The quality of the current cell drops below S_{No service} 405upon which the UE starts to display 'no service'. The UE-AS continues cell selection for any PLMN
T7 The quality of the single PLMN that UE-AS is able to detect current cell exceeds S_{No service} 405 upon which the UE stops to display 'no service' and resumes normal service for the concerned PLMN i.e. UE-AS reports the PLMN as available, UE-NAS initiates registration upon which the concerned PLMN becomes the registered PLMN

### Alternative

T8 The quality of one of the PLMNs that the UE was able to detect exceeds S_{Entry} 401 upon which the UE stops to display 'no service' and resumes normal service for the concerned PLMN, as for T7

Timer-B, as described in the previous, could be made operator configurable in order to introduce a more flexible 'leaving condition'

One could wonder if the UE should apply cell selection rather than cell - reselection while Timer-B, as in the example above is running. Table 4 below shows the main differences between cell selection and cell re-selection.

**Table 4**

| Aspect | Cell re-selection | Cell selection |
|---|---|---|
| Frequencies & RATs to search for neighbouring cells | Frequencies & RATs broadcast by the currently selected cell | Any frequency and RAT |
| Cell acceptance condition | Target cell is better than serving cell with an amount & duration depending on operator controllable cell re-selection parameters e.g. an offset better for at least a given period | Target cell only has to meet cell suitability criteria |

The above table shows that with cell selection, the UE accepts an alternative frequency/RAT earlier/at a higher quality level.

Some possible reasons about why this approach may have been selected for the current specification:
Due to the lowness of the S-criteria, it is likely the UE is unable to reach the broadcast channel correctly. Hence, the cell re-selection parameter values that the UE previously read from the broadcast channel may not be up to date anymore.

The UE may have moved away from the cell in which it read the broadcast information. The set of neighbours broadcast by the original cell may not be appropriate for the area the UE has moved to.

The new 'leave condition' may correspond with a certain likelihood that the UE is able to receive the broadcast and paging channels, as well to transmit the initial access message. The arguments indicated above are assumed to still apply, although maybe to a lesser extent. Another consideration could be that from a UE implementation perspective it would be easier to apply cell selection criteria when searching all frequencies and RATs i.e. this may be more similar to the UE implementation for other scenario's.

Since the UE may be able to receive the broadcast channel, although it may take a little longer, we do not wish to exclude the option to apply cell reselection either:
While the UE operates Timer-B, it either applies cell selection or cell reselection for the registered (e)PLMN.

The proposed solution addresses the basic root problem rather than finding a solution around some adverse characteristics.

Compared to the temporary solution, the proposed mechanism results in a simpler solution i.e. avoiding the complexities of start and stop conditions of a temporary mechanism.

### Radio quality parameters

The characteristics of the mechanism to prevent ping ponging may depend on where the function is implemented. One main factor is the nature of the available radio quality information, which differs between protocol layers e.g. UE-AS has more detailed information available than UE-NAS.

UE-NAS only has limited radio quality information available i.e. upon performing a full scan, UE-AS indicates which of the available PLMNs are high quality and for the other (low quality) PLMNs it provides a single measured quality e.g. the CPICH RSCP value in case of FDD. The UE-AS however, typically has more quality information available e.g. for FDD it also applies the Ec/No measurement.

Another aspect is that UE-AS is aware about the parameters/ criteria for making a cell suitable i.e. the criteria for 'leaving the PLMN'.

The availability of more detailed radio quality information enables the UE-AS to make a better judgement about the quality of a radio link than UE-NAS. For UMTS FDD, additional use of the Ec/No quality measures will result in decisions taking the uplink interference/ quality better into account.

The PLMN ping pong avoidance mechanism can utilise more than one condition e.g. to reflect both uplink and downlink quality conditions.

Knowledge of the parameters/ criteria for making a cell suitable means that in UE-AS it is easy to introduce a return condition that is relative to the condition for leaving.

The PLMN ping pong avoidance mechanism could either be implemented in AS or in NAS.

The PLMN ping pong avoidance mechanism can either utilise relative or absolute quality conditions.

A PLMN may include access networks using more than one radio access technology (RATs) e.g. GSM, UMTS, LTE. In each radio access technology different measurement quantities may be used to indicate the quality of the radio connection. More general, each radio technologies may have quite different characteristics. This means that the ping pong avoidance control parameters e.g. those related to the quality level, as used in different radio access technologies may need to be different. Thus, it is desirable that the PLMN ping pong avoidance mechanism allows the use of different control parameters for different radio technologies in order to accommodate PLMNs including multiple radio access technologies.

The PLMN ping pong avoidance mechanism allows the use of different control parameters for different radio technologies in order to accommodate PLMNs including multiple radio access technologies.

### Control/ signalling aspects

It is considered that the network that the UE should re-enter/ return to should provide the control information, since that is the appropriate network to indicate that it allows the UE to stay longer in another PLMN (so as to avoid excessive signalling and bad user experience). If the control parameters were provided in the currently registered PLMN, it would be easy to misuse the control parameters in an attempt to keep the UEs in the current PLMN, although that is not preferred by the use and nor by its home PLMN operator.

The PLMN ping pong avoidance control parameters should be provided by the radio access network the UE should avoid to return to i.e. the previously registered PLMN.

The parameters to control the PLMN ping pong avoidance could be provided to the UE in different ways:
The UE acquires the parameters when it was previously registered on the PLMN and stores them for later use i.e. when this PLMN has become the previous PLMN. The UE could e.g. apply a variable 'previous PLMN' to store this information.

The UE acquires the parameters from the PLMN at the time it attempts to return to the PLMN.

It seems there is a general desire to avoid that the UE is required to store information concerning a PLMN other than the one the UE is currently registered on. Apparently, this desire especially applies for the UE-AS. Furthermore, it should be noted that when the UE attempts to return to a PLMN i.e. when indicating the available PLMNs to the UE-NAS it has to acquire certain information broadcasted by the concerned cell. Hence, it may not be a significant burden to also acquire further information like the concerned control parameters at that same time. Considering that, it seems the approach in which the control parameters are acquired from the PLMN at the time it attempts to return to the PLMN is preferable. Nevertheless, the other approach need not be excluded.

The UE may acquire the PLMN ping pong avoidance control parameters either when it was previously registered on the PLMN (in which case it needs to store them for later use) or it may acquire them when attempting to return to the concerned PLMN.

The PLMN ping pong avoidance control parameters are assumed to be broadcast. In case the UE acquires the parameters from the PLMN at the time it attempts to return to the PLMN, it would be beneficial to signal these parameters together with the PLMN identity which the UE anyhow has to read at that time.

The PLMN ping pong avoidance control parameters may be broadcast and may be signalled together with the PLMN identity.

In the case of UMTS, the PLMN identity(ies) is signalled in the Master Information Block (MIB). This system information block has an area scope of 'cell' meaning that the information is valid only in the cell in which it is read. It is assumed that the need for PLMN ping pong avoidance may differ from cell to cell e.g. because the deployment conditions are different in different areas. Hence, it seems desirable to be able to set the control parameters differently in each cell - in other words area scope of 'cell' seems appropriate.

Note: This approach does not apply for the case the UE acquires the PLMN ping pong avoidance control parameters when previously registered on the PLMN. This is because the UE may attempt to return to a different cell than the one in which the control parameters were read.

It should be possible to configure different PLMN ping pong avoidance control parameters in each cell - in UMTS/ RRC this implies the parameters should have area scope set to 'cell'.

The drawbacks of the PLMN ping pong are considered to be more severe when the UE is in connected mode as compared to when the UE is in idle mode. Although the signalling overhead would be the same in both cases, the user is considered to be more susceptible to 'temporary unavailability' when in connected mode - which should normally correspond with a higher level of activity. As a result, there may be some interest in configuring different parameters for idle and connected mode UEs.

It should be possible to configure different PLMN ping pong avoidance control parameters for idle and connected mode UEs.

The Master information block is transmitted frequently. Hence, addition of new parameters is only acceptable if there is good justification. Also in general adding parameters to system information messages should be done with care considering the relative cost of broadcasting transmission mechanism. Hence, it may be desirable to perform some signalling optimisation. One possibility would be to, when a quality criterion considering both Ec/No and RSCP quality measures is introduced, to anyhow to signal a single 'Quality offset' parameter. This single parameter could possibly indicate the offset values to be used for each measurement quantity by means of a mapping table e.g. as shown below Table 5.

**Table 5**

| Quality offset value | Ec/No offset | RSCP offset |
|---|---|---|
| 0 | 1 | 2 |
| 1 | 2 | 4 |
| 2 | 4 | 8 |

### Possible realisations/ examples

In the previous we have provided a number of proposals that may be combined to construct a complete mechanism. In this section we provide an outline of such a complete mechanism, merely as an example. This example applies the following proposals:
A PLMN ping pong avoidance mechanism utilising:
   A temporary quality level based condition.

The temporary nature is realised by means of a timer e.g. TimerPPA.

Utilising a relative quality condition.

The PLMN ping pong avoidance control parameters are provided by the radio access network the UE should avoid to return to i.e. the previously registered PLMN as follows.

The UE acquires the parameters at the time it attempts to return to the PLMN i.e. during the full scan performed by the UE (meaning that the control parameters need not be stored by the UE).

The control parameters may be specific to the cell (and hence implicitly also to the radio access technology).

In the case of UMTS, the control parameters could be included in the Master Information Block.

The mechanism is primarily implemented in UE-AS with some support by UE-NAS in order to avoid that the UE-AS needs to store information concerning a PLMN the UE is currently not registered on.

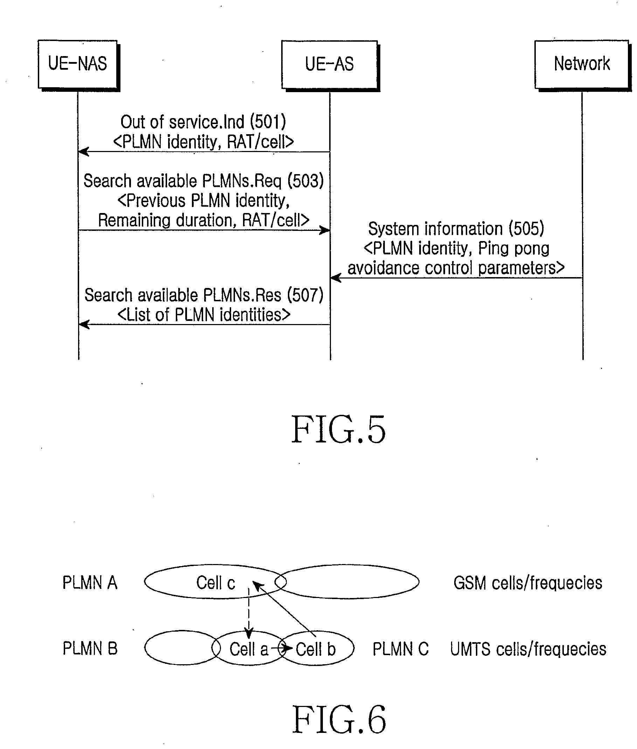

FIG. 5 is a flowchart illustrating the communications between the UE-AS, UE-NAS and a network element according to one embodiment of the present invention. In step 501, UE-AS reports to UE-NAS that it is going out of service on a PLMN (i.e. a suitable cell is not even found after a full scan).

The UE-NAS stores information to avoid ping pong to this PLMN e.g. it may store the PLMN identity, possibly with a 'ping pong avoidance flag'. Possibly this information could be stored with other information in UE-NAS e.g. the forbidden PLMNs information.

In step 503, when UE-NAS requests the UE to indicate the available PLMNs, UE-NAS provides the PLMN identity of the PLMN the UE should avoid to return to.

In step 505, when UE-AS performs a full scan and finds PLMNs with the concerned PLMN identity or one equivalent to that, the UE acquires the ping pong avoidance control parameters from the concerned cell (Network).

In step 507, the UE-AS reports the concerned PLMN as one of the available PLMNs unless the ping pong avoidance conditions are met:
The quality is below the required level e.g. either the Ec/No or the CPICH RSCP is less than offset higher than the criteria for making the cell suitable, the duration is also below the required value i.e. TimerPPA has not expired.

The above example is illustrated by a sequence diagram illustrating a possible interaction between UE-AS & UE-NAS. It should be noted that the application of the PPA duration constraint could either be implemented in UE-NAS or in UE-AS.

In the above example, UE-NAS maintains a ping pong avoidance flag which is set upon receiving an 'out of service' indication from UE-AS. The example also shows that the 'out of service' indication could not only include the identity of the previous PLMN, but also information about the radio access technology or the actual cell in which the out of service condition was triggered. This additional information could be used to introduce a more specific ping pong avoidance flag i.e. to avoid ping pong not to the entire PLMN but only to the same cell or the same RAT.

The ping pong avoidance mechanism could either be generic i.e. avoiding return to the entire previous PLMN or it could be more specific i.e. avoiding return to a specific part of the PLMN e.g. the previous RAT, the previous cell.

### Final remarks

In the previous section an example of a possible realisation of a ping pong avoidance mechanism was provided. In this section we briefly evaluate how this example mechanism addresses a number of specific situations.

FIG. 6 is a schematic illustration of a deployment scenario according to another embodiment of the present invention.

The Fig. 6 illustrates a possible network deployment scenario in an area in which UMTS and GSM cells are deployed. In the Fig. 6, different capital letters A, B, C indicate different PLMN identities.

Furthermore, a UE on PLMN B may be configured with an equivalent PLMN i.e. PLMN identity A. Let's now consider the scenario in which the UE detects out of service while in cell A and somehow not manage to find a suitable cell for the (e)PLMN, so it moves to cell b i.e. performs PLMN re-selection to PLMN C.

The ping pong avoidance mechanism would now be able to avoid the UE ping pongs between cell a and cell b. However, due to the use of a different PLMN identity the mechanism does not prevent that the UE moves to cell c. In case the cell re-selection configuration is such that the UE is stimulated to move back to cell a, we may still have a problem. However, this is considered to be an unlikely scenario since normally in a deployment situation like the above, the UE should re-select to cell c even before detecting out of service in cell a. Hence, it seems that no specific handling is needed to accommodate the case that equivalent PLMNs are configured.
In the previous we indicated that it would be an advantage if the mechanism can avoid the immediate return to the cell/ PLMN in which the out of service was triggered i.e. upon the initial full scan upon detecting OOS. The example mechanism described in the previous section should be able to address the immediate return, irrespective if UE-NAS is involved in triggering the initial full scan performed.

A final question is what the UE should do in the following case:
the ping pong avoidance conditions are met for the 'previous PLMN' i.e. due to these conditions the UE should not report the previous PLMN as an available PLMN, the UE is unable to find any other PLMNs it can report to UE-AS as available PLMN.

In this case the ping pong avoidance conditions only have adverse effect and hence our proposal is that in this case the conditions should not be applied. The ping pong avoidance criterion should not be applied if the 'previous PLMN' is the only PLMN the UE detects.

## Claims

1. A method for performing public land mobile network, PLMN, ping pong avoidance by a user equipment, UE (101), which selects a cell in a mobile communication system, the method comprising:
scanning periodically for available PLMNs, upon PLMN reselection;
when the UE detects a cell of an available PLMN, avoiding return to a previously registered PLMN among the available PLMNs, based on one or more quality-based parameters (505) included in control information for the PLMN ping pong avoidance,
wherein the control information for the PLMN ping pong avoidance is acquired from the previously registered PLMN.

2. The method of claim 1, wherein the one or more quality-based parameters (505) comprise at least one offset value related to signal level or signal quality.

3. The method of claim 1 or 2, wherein the one or more quality-based parameters (505) are acquired from a system information block or master information block transmitted by the previously registered PLMN.

4. The method of one of claims 1 to 3, wherein the one or more quality-based parameters (505) are broadcasted from the previously registered PLMN.

5. The method of one of claims 1 to 4, wherein the one or more quality-based parameters (505) are configured to have a different value according to whether the UE (101) is an idle mode UE or a connected mode UE.

6. A user equipment, UE (101), configured for performing public land mobile network, PLMN, ping pong avoidance, the UE configured for selecting a cell in a mobile communication system, the UE comprising:
means for scanning periodically for available PLMNs, upon PLMN reselection; and
means for avoiding return to a previously registered PLMN among the available PLMNs, based on one or more quality-based parameters included in control information for the PLMN ping pong avoidance, when the UE detects a cell of an available PLMN,
wherein the control information for the PLMN ping pong avoidance is acquired from the previously registered PLMN.

7. The UE (101) of claim 6, wherein the one or more quality-based parameters (505) comprise at least one offset value related to signal level or signal quality.

8. The UE (101) of claim 6 or 7, wherein the one or more quality-based parameters (505) are acquired from a system information block or master information block transmitted by the previously registered PLMN.

9. The UE (101) of one of claims 6 to 8, wherein the one or more quality-based parameters (505) are broadcasted from the previously registered PLMN.

10. The UE (101) of one of claims 6 to 9, wherein the one or more quality-based parameters (505) are configured to have a different value according to whether the UE is an idle mode UE or a connected mode UE.

## Patentansprüche

1. Verfahren zur Ausführung einer Vermeidung eines ständigen Umschaltens zwischen öffentlichen Netzwerken, PLMN, durch eine Anwendereinrichtung, UE (101), die eine Zelle in einem Mobilkommunikationssystem auswählt, wobei das Verfahren umfasst:
periodisches Suchen nach verfügbaren PLMNs bei Neuauswahl eines PLMN;
wenn die UE eine Zelle eines verfügbaren PLMN erkennt, Verhindern einer Rückkehr zu einem zuvor registrierten PLMN aus den verfügbaren PLMNs auf der Grundlage eines oder mehrerer qualitätsbasierter Parameter (505), die in Steuerinformation für die Vermeidung des ständigen Umschaltens zwischen PLMNs enthalten sind, wobei die Steuerinformation für die Vermeidung des ständigen Umschaltens zwischen PLMNs aus dem zuvor registrierten PLMN gewonnen wird.

2. Verfahren nach Anspruch 1, wobei der eine oder die mehreren qualitätsbasierten Parameter (505) mindestens einen Offset-Wert, der mit dem Signalpegel oder Signalqualität in Beziehung steht, umfassen.

3. Verfahren nach Anspruch 1 oder 2, wobei der eine oder die mehreren qualitätsbasierten Parameter (505) aus einem Systeminformationsblock oder einem Hauptinformationsblock gewonnen werden, der von dem zuvor registrierten PLMN übertragen wird.

4. Verfahren nach einem der Ansprüche 1 bis 3, wobei der eine oder die mehreren qualitätsbasierten Parameter (505) als Rundruf von dem zuvor registrierten PLMN gesendet werden.

5. Verfahren nach einem der Ansprüche 1 bis 4, wobei der eine oder die mehreren qualitätsbasierten Parameter (505) ausgebildet sind, einen unterschiedlichen Wert abhängig davon zu haben, ob die UE (101) eine UE im Bereitschaftsmodus oder eine UE in einem verbundenen Modus ist.

6. Anwendereinrichtung, UE (101), die ausgebildet ist zur Ausführung einer Vermeidung eines ständigen Umschaltens zwischen öffentlichen Mobilnetzwerken, PLMN, wobei die UE ausgebildet ist zur Auswahl einer Zelle in einem Mobilkommunikationssystem, wobei die UE umfasst:
eine Einrichtung zum periodischen Suchen nach verfügbaren PLMNs bei Neuauswahl eines PLMN; und
eine Einrichtung zur Verhinderung der Rückkehr zu einem zuvor registrierten PLMN aus den verfügbaren PLMNs auf der Grundlage eines oder mehrerer qualitätsbasierter Parameter, die in Steuerinformation für die Vermeidung eines ständigen Umschaltens zwischen PLMNs enthalten sind, wenn die UE eine Zelle eines verfügbaren PLMN erkennt,
wobei die Steuerinformation für die Vermeidung eines ständigen Umschaltens zwischen PLMNs aus dem zuvor registrierten PLMN gewonnen wird.

7. UE (101) nach Anspruch 6, wobei der eine oder die mehreren qualitätsbasierten Parameter (505) mindestens einen Offset-Wert umfassen, der mit einem Signalpegel oder einer Signalqualität in Beziehung steht.

8. UE (101) nach Anspruch 6 oder 7, wobei der eine oder die mehreren qualitätsbasierten Parameter (505) aus einem Systeminformationsblock oder Hauptinformationsblock, der durch das zuvor registrierte PLMN übertragen wird, gewonnen sind.

9. UE (101) nach einem der Ansprüche 6 bis 8, wobei der eine oder die mehreren qualitätsbasierten Parameter (505) aus dem zuvor registrierten PLMN als Rundfunk übermittelt sind.

10. UE (101) nach einem der Ansprüche 6 bis 9, wobei der eine oder die mehreren qualitätsbasierten Parameter (505) ausgebildet sind, einen unterschiedlichen Wert abhängig davon zu haben, ob die UE eine UE im Bereitschaftszustand oder eine UE im verbundenen Zustand ist.

## Revendications

1. Procédé pour effectuer l'évitement d'un effet ping-pong dans un réseau mobile terrestre public, PLMN (Public Land Mobile Network), au moyen d'un équipement utilisateur, UE (User Equipment) (101), qui sélectionne une cellule dans un système de communication mobile, le procédé comprenant :
le balayage périodique des PLMN disponibles, sur resélection de PLMN ;
lorsque l'UE détecte une cellule d'un PLMN disponible, l'évitement d'un retour à un PLMN précédemment enregistré parmi les PLMN disponibles, en fonction d'un ou plusieurs paramètres fondés sur la qualité (505) inclus dans des informations de contrôle destinées à l'évitement d'un effet ping-pong de PLMN,
dans lequel les informations de contrôle destinées à l'évitement d'un effet ping-pong de PLMN sont acquises auprès du PLMN précédemment enregistré.

2. Le procédé de la revendication 1, dans lequel l'un ou plusieurs paramètres fondés sur la qualité (505) comprennent au moins une valeur de décalage associée à un niveau de signal ou à une qualité de signal.

3. Le procédé de la revendication 1 ou 2, dans lequel l'un ou plusieurs paramètres fondés sur la qualité (505) sont acquis à partir d'un bloc d'informations système ou d'un bloc d'informations maître transmis par le PLMN précédemment enregistré.

4. Le procédé d'une des revendications 1 à 3, dans lequel l'un ou plusieurs paramètres fondés sur la qualité (505) sont diffusés depuis le PLMN précédemment enregistré.

5. Le procédé d'une des revendications 1 à 4, dans lequel l'un ou plusieurs paramètres fondés sur la qualité (505) sont configurés pour disposer d'une valeur différente selon que l'UE (101) est un UE en mode de veille ou un UE connecté.

6. Équipement utilisateur, UE (101), configuré pour effectuer l'évitement d'un effet ping-pong dans un réseau mobile terrestre public, PLMN, l'UE configuré pour la sélection d'une cellule dans un système de communication mobile, l'UE comprenant :
un moyen de balayer périodiquement des PLMN disponibles, sur resélection de PLMN ; et
un moyen d'éviter un retour à un PLMN précédemment enregistré parmi les PLMN disponibles, en fonction d'un ou plusieurs paramètres fondés sur la qualité (505) inclus dans des informations de contrôle destinées à l'évitement d'un effet ping-pong de PLMN, lorsque l'UE détecte une cellule d'un PLMN disponible,
dans lequel les informations de contrôle destinées à l'évitement d'un effet ping-pong de PLMN sont acquises auprès du PLMN précédemment enregistré.

7. L'UE (101) de la revendication 6, dans lequel l'un ou plusieurs paramètres fondés sur la qualité (505) comprennent au moins une valeur de décalage associée à un niveau de signal ou à une qualité de signal.

8. L'UE (101) de la revendication 6 ou 7, dans lequel l'un ou plusieurs paramètres fondés sur la qualité (505) sont acquis à partir d'un bloc d'informations système ou d'un bloc d'informations maître transmis par le PLMN précédemment enregistré.

9. L'UE (101) d'une des revendications 6 à 8, dans lequel l'un ou plusieurs paramètres fondés sur la qualité (505) sont diffusés depuis le PLMN précédemment enregistré.

10. L'UE (101) d'une des revendications 6 à 9, dans lequel l'un ou plusieurs paramètres fondés sur la qualité (505) sont configurés pour disposer d'une valeur différente selon que l'UE est un UE en mode de veille ou un UE connecté.
